# EUROPEAN PATENT APPLICATION

(11) **EP 3 276 161 A1**
(43) Date of publication of application: **31.01.2018**
(21) Application number: 16768945.4
(22) Date of filing: 25.03.2016
(51) Int. Cl.: F03C 1/253

(54) **HYDRAULIC MOTOR, BRAKE DEVICE THEREFOR, AND METHOD FOR MANUACTURING BRAKE DEVICE**

(30) Priority: 26.03.2015 JP 2015064758
(71) Applicant: KYB Corporation, Tokyo 105-6111 (JP)
(72) Inventor: SUZUKI, Kenji, Tokyo 105-6111 (JP); KUBOI, Hiroaki, Tokyo 105-6111 (JP)
(74) Representative: TBK
(86) International application number: PCT/JP2016/059636
(87) International publication number: WO 2016/153042

(57) **Abstract**

A brake device 20 that puts a brake on a hydraulic motor 1 includes a disc plate 21 configured to rotate with a cylinder block 3, a brake piston 27 supported by a first case 12, and brake springs 35, 45 compressed and placed between the brake piston 27 and a second case 13. The second case 13 has a dent shaped or projection shaped holding portion 30, 32, 42 into which one ends of the brake springs 35, 45 are inserted, and the brake springs 35, 45 are held by the holding portion 30, 32, 42 even in a state where the other ends are away from the brake piston 27.

## Description

### TECHNICAL FIELD

The present invention relates to a fluid pressure motor, a brake device of the same, and a method of manufacturing a brake device.

### BACKGROUND ART

A hydraulic motor used for a construction machine and an industrial machine, in which a rotating body provided inside is rotated by hydraulic pressure includes a brake device configured to stop the rotating body. This brake device has a rotation plate provided in the rotating body, a fixed plate provided in a non-rotating body, and a coil spring configured to press the rotation plate to the fixed plate via a piston, and generates friction brake force between the rotation plate and the fixed plate by bias force of the coil spring to stop the rotating body.

JP2003-139040A describes a brake device of a hydraulic motor, including an annular member in which plural holes for insertion of coil springs are formed. In this brake device of the hydraulic motor, by fixing the annular member to a casing, the coil springs can be easily assembled into the hydraulic motor.

### SUMMARY OF INVENTION

However, with the brake device of the hydraulic motor disclosed in JP2003-139040A, a member for assembling the coil springs is separately required. Thus, the number of parts forming the brake device is increased and manufacturing cost of the hydraulic motor is increased.

An object of the present invention is to reduce the number of parts of a brake device and to reduce manufacturing cost of a fluid pressure motor.

According to one aspect of the present invention, a brake device configured to put a brake on a fluid pressure motor including a cylinder block to be rotated by fluid pressure and an output shaft to be rotated integrally with the cylinder block in a case, includes: a disc plate configured to rotate with the cylinder block, the disc plate being movable in the axial direction of the output shaft; a brake piston supported by the case movably in the axial direction of the output shaft; and a bias member compressed and placed between the brake piston and the case, the bias member being configured to press the brake piston toward the disc plate. The case has a dent shaped or projection shaped holding portion into which one end of the bias member is inserted, and the bias member is held by the holding portion even in a state where the other end is away from the brake piston.

### BRIEF DESCRIPTION OF DRAWINGS

Fig. 1 is a sectional view showing the entire configuration of a hydraulic motor to which a brake device according to a first embodiment of the present invention is applied.
Fig. 2 is an enlarged sectional view showing the brake device of Fig. 1.
Fig. 3 is a sectional view taken along the line III-III of Fig. 2.
Fig. 4 is a view for illustrating a method of manufacturing the brake device.
Fig. 5 is a sectional view showing a modified example of the brake device according to the first embodiment of the present invention.
Fig. 6 is a sectional view taken along the line VI-VI of Fig. 5.
Fig. 7 is a sectional view of a brake device according to a second embodiment of the present invention.
Fig. 8 is a sectional view taken along the line VIII-VIII of Fig. 7.
Fig. 9A is a sectional view showing a first modified example of the brake device according to the second embodiment of the present invention.
Fig. 9B is a sectional view showing a second modified example of the brake device according to the second embodiment of the present invention.
Fig. 9C is a sectional view showing a third modified example of the brake device according to the second embodiment of the present invention.
Fig. 9D is a sectional view showing a fourth modified example of the brake device according to the second embodiment of the present invention.
Fig. 9E is a sectional view showing a fifth modified example of the brake device according to the second embodiment of the present invention.

### DESCRIPTION OF EMBODIMENTS

Hereinafter, embodiments of the present invention will be described with reference to the drawings.

### <First Embodiment>

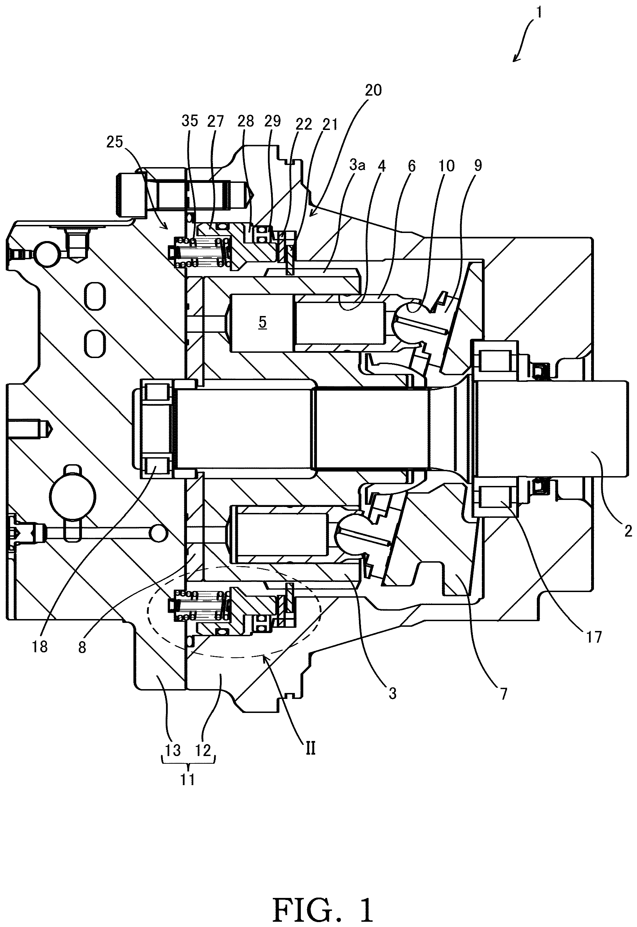

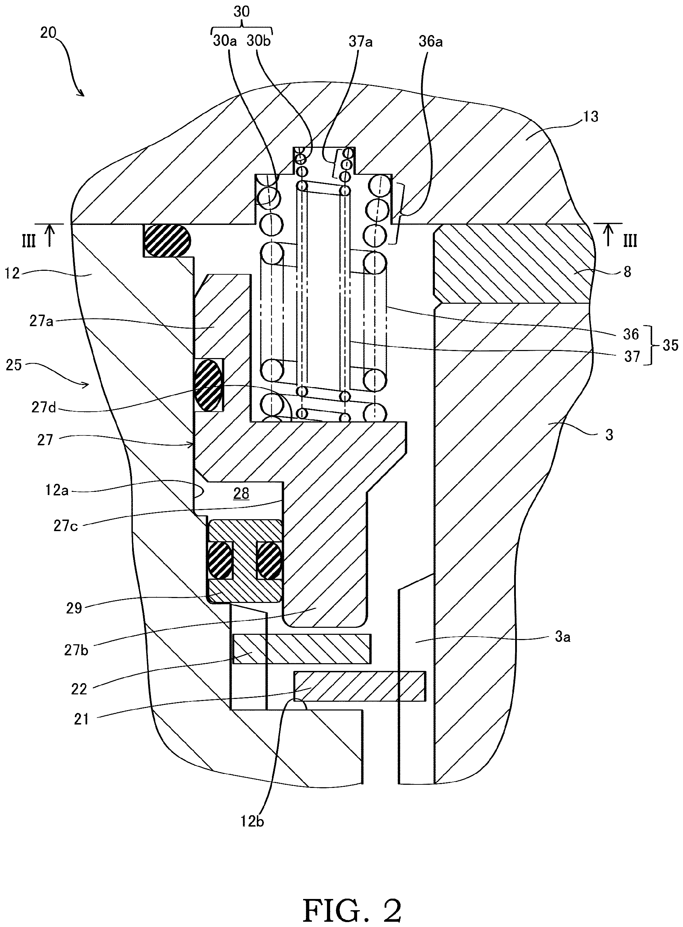

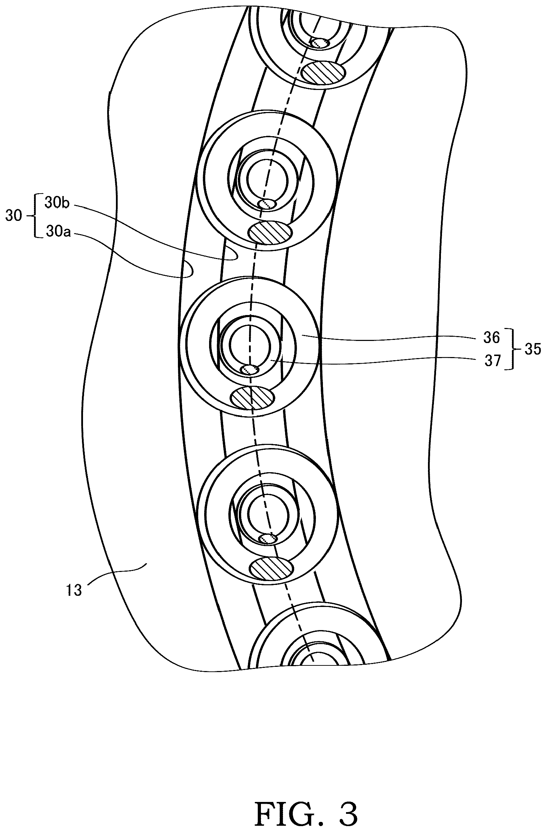

With reference to Figs. 1 to 3, a brake device 20 serving as a first embodiment of the present invention will be described. Fig. 1 is a sectional view showing the entire configuration of a hydraulic motor 1 serving as a fluid pressure motor to which the brake device 20 is applied. Fig. 2 is an enlarged sectional view showing the brake device 20 of the hydraulic motor 1. Fig. 3 is a sectional view showing part of a section taken along the line III-III of Fig. 2.

Firstly, with reference to Fig. 1, the entire configuration of the hydraulic motor 1 will be described. The hydraulic motor 1 is, for example, a swash plate type hydraulic motor used for a traveling device such as a construction machine.

The hydraulic motor 1 includes an output shaft 2 coupled to a load (not shown), and a cylinder block 3 coupled to the output shaft 2 to be rotated integrally with the output shaft 2. The output shaft 2 is rotatably supported by a case 11 serving as a hydraulic motor main body via bearings 17, 18. The case 11 is divided into a first case 12 serving as a lower side case configured to house the cylinder block 3, and a second case 13 serving as an upper side case combined with the first case 12 via a bolt.

Plural cylinders 4 are opened on the concentric circle centered on the output shaft 2 in the cylinder block 3 in parallel to the output shaft 2. A piston 6 defining a volume chamber 5 is reciprocatably and slidably inserted into each of the cylinders 4.

A shoe 9 is coupled to a leading end of the piston 6 via a spherical surface base 10. The shoe 9 is in surface contact with a swash plate 7 fixed to the first case 12. Following rotation of the cylinder block 3, the shoe 9 is brought into sliding contact with the swash plate 7, so that the piston 6 reciprocates by a stroke amount in accordance with a tilt angle of the swash plate 7.

A valve plate 8 in sliding contact with a base end surface of the cylinder block 3 is attached between the second case 13 and the cylinder block 3. The valve plate 8 has a supply port (not shown) communicating with a hydraulic source, and a discharge port (not shown) communicating with the tank side. The piston 6 projects from the cylinder 4 by hydraulic pressure guided from the hydraulic source to the volume chamber 5 via the supply port, and the piston 6 pushes the swash plate 7 via the shoe 9, so that the cylinder block 3 is rotated. The rotation of the cylinder block 3 is transmitted to the load via the output shaft 2.

A friction brake type brake device 20 configured to put a brake on the rotation of the cylinder block 3 is built in the hydraulic motor 1. The brake device 20 will be described with reference to Fig. 2 as well. Fig. 2 shows a state at the time of cancelling the brake.

The brake device 20 includes a disc plate 21 to be rotated together with the cylinder block 3, a friction plate 22 non-rotatably provided in the case 11, the friction plate 22 being configured to generate friction brake force between the friction plate 22 and the disc plate 21 by being abutted with the disc plate 21, and a brake activation mechanism 25 capable of generating the friction brake force by pressing the disc plate 21 the friction plate 22 against one another and cancelling the friction brake force by cancelling the pressing.

The disc plate 21 is formed into a ring shape and teeth (not shown) are formed in an inner periphery of the disc plate. Splines 3a extending in the axial direction of the output shaft 2 are formed in an outer periphery of the cylinder block 3. By meshing the teeth of the disc plate 21 with the splines 3a of the cylinder block 3, the disc plate 21 can be rotated following the rotation of the cylinder block 3 and moved in the axial direction of the output shaft 2. In such a way, the disc plate 21 is spline-fitted to the outer periphery of the cylinder block 3.

The friction plate 22 is formed into a ring shape and attached to an inner periphery of the first case 12 non-rotatably with respect to the first case 12 and movably in the axial direction of the output shaft 2. The friction plate 22 is also spline-fitted to the inner periphery of the first case 12 as well as the disc plate 21.

Plural disc plates 21 and plural friction plates 22 may be arranged. In this case, the disc plates 21 and the friction plates 22 are arranged alternately in the axial direction of the output shaft 2.

The brake activating mechanism 25 includes an annular brake piston 27 supported by the first case 12, the brake piston 27 being movable in the axial direction of the output shaft 2, plural brake springs 35 serving as a bias member placed between the second case 13 and the brake piston 27, the brake springs 35 being configured to bias the brake piston 27 toward the disc plate 21, and a brake cancellation chamber 28 to which the brake piston 27 is moved against bias force of the brake springs 35 by supplying pressure oil.

The brake piston 27 has a sliding portion 27a configured to slide along an inner peripheral wall 12a of the first case 12, and a piston portion 27b provided integrally with the sliding portion 27a, the piston portion 27b being configured to press the friction plate 22 onto the disc plate 21 by being abutted with the facing friction plate 22.

An outer diameter of the piston portion 27b is formed to be smaller than that of the sliding portion 27a. A space is formed between an outer peripheral surface 27c of the piston portion 27b and the inner peripheral wall 12a of the first case 12.

A ring body 29 abutted with both the outer peripheral surface 27c of the piston portion 27b and the inner peripheral wall 12a of the first case 12 is arranged in the space. The brake cancellation chamber 28 is defined by the outer peripheral surface 27c of the piston portion 27b, the inner peripheral wall 12a of the first case 12, and a base end surface of the ring body 29.

As shown in Fig. 2, a stage portion 27d cut out into an L shape is formed on the inner peripheral side of the sliding portion 27a of the brake piston 27. The plural brake springs 35 are seated on the stage portion 27d. However, no seating surface is formed by spot facing, etc. for each of the brake springs 35 but the stage portion is formed to be flat.

A groove 30 serving as a dent shaped holding portion configured to hold one ends of the brake springs 35 is formed in a portion of the second case 13 facing the stage portion 27d. As shown in Fig. 3, the groove 30 has a first groove 30a serving as a first holding portion, and a second groove 30b serving as a second holding portion formed in the first groove 30a.

The brake springs 35 are double coil springs having an outer spring 36 and an inner spring 37 arranged on the inner side of the outer spring 36, placed between the stage portion 27d and the groove 30. One end portion 36a of the outer spring 36 and one end portion 37a of the inner spring 37 are formed into a tapered shape in which an outer diameter is gradually increased toward an end surface.

The maximum outer diameter of the one end portion 36a of the outer spring 36 is set to be slightly larger than width of the first groove 30a. The maximum outer diameter of the one end portion 37a of the inner spring 37 is set to be slightly larger than width of the second groove 30b.

Therefore, by being inserted into the groove 30, the brake springs 35 are held by the second case 13. Specifically, by press-fitting the one end portion 36a of the outer spring 36 into the first groove 30a and press-fitting the one end portion 37a of the inner spring 37 into the second groove 30b, the outer spring 36 and the inner spring 37 are respectively held by the second case 13.

In such a way, the one ends of the brake springs 35 are held by the second case 13. Thus, even when the other ends of the brake springs 35 are away from the stage portion 27d before the second case 13 and the first case 12 are assembled, the brake springs do not drop off the second case 13. In particular, contact surfaces of the one end portions 36a, 37a of the brake springs 35, the surfaces to be in contact with the second case 13 by press-fitting are formed to be inclined with respect to the axial direction of the output shaft 2. Thus, the brake springs 35 are reliably press-fitted into the second case 13. The tapered portions may be provided on the side of the groove 30 instead of the brake springs 35. In this case, side walls forming the groove 30 are inclined with respect to the axial direction of the output shaft 2 and formed in such a manner that a gap between the side walls gradually extends toward an opening end.

Instead of the configuration in which the one end portion 36a of the outer spring 36 and the one end portion 37a of the inner spring 37 are formed into a tapered shape, the brake springs 35 may be press-fitted into the groove 30 by making an outer diameter of part of the one end portion 36a slightly larger than the width of the first groove 30a and making an outer diameter of part of the one end portion 37a slightly larger than the width of the second groove 30b. For example, the outer spring 36 is also press-fitted into the first groove 30a by making only an outer diameter of the terminal end of the one end portion 36a of the outer spring 36 slightly larger than the width of the first groove 30a.

Instead of the configuration in which the one end portion 36a of the outer spring 36 and the one end portion 37a of the inner spring 37 are formed into a tapered shape, the brake springs 35 may be press-fitted into the groove 30 by making width of part of the first groove 30a slightly smaller than the outer diameter of the one end portion 36a and making width of part of the second groove 30b slightly smaller than the outer diameter of the one end portion 37a. For example, the outer spring 36 is also press-fitted into the first groove 30a by making only width of the vicinity of a bottom surface of the first groove 30a slightly smaller than the outer diameter of the one end portion 36a of the outer spring 36. In such a way, a shape of the one end portions 36a, 37a of the brake springs 35 and a shape of the groove 30 are formed in any manners as long as the brake springs 35 are press-fitted into the groove 30.

The interior of the brake cancellation chamber 28 is selectively connected to a tank or a hydraulic pressure supply source via a fluid pressure circuit (not shown). By switching the selection, pressure oil is supplied to or discharged from the interior of the brake cancellation chamber 28, and accordingly, the brake piston 27 is displaced and a brake action or cancellation of the brake action is performed. Details of the actions will be described later.

A brim portion 12b configured to regulate predetermined movement or more of the disc plate 21 and the friction plate 22, the movement in the axial direction of the output shaft 2 when the brake piston 27 is brought forward by the bias force of the brake springs 35 is formed in the first case 12.

Therefore, the disc plate 21 and the friction plate 22 are pressed against one another between the brake piston 27 and the brim portion 12b, and the friction brake force is generated between the disc plate 21 and the friction plate 22. At this time, the disc plate 21 facing the brim portion 12b is abutted with the brim portion 12b. Thus, the friction brake force is also generated between the disc plate 21 and the brim portion 12b. In such a way, the brim portion 12b also functions as well as the friction plate 22.

Next, with reference to Figs. 1 and 2, the actions of the brake device 20 will be described. Figs. 1 and 2 show a state at the time of cancelling the brake.

By letting the pistons 6 reciprocate by pressure oil guided to the cylinders 4 and letting the pistons 6 push the swash plate 7 via the shoes 9, the cylinder block 3 is rotated.

In order to put a brake on the rotation of the cylinder block 3 at the time of operating the hydraulic motor 1, the brake cancellation chamber 28 is connected to the tank side. Thereby, the pressure oil in the brake cancellation chamber 28 is released to the tank. Thus, the brake piston 27 is brought forward toward the friction plate 22 by the bias force of the brake springs 35 from the state shown in Fig. 2.

The brake piston 27 is abutted with the facing friction plate 22 to move the friction plate 22 and the disc plate 21 in the axial direction of the output shaft 2.

By this movement, the disc plate 21 is abutted with the brim portion 12b and movement of the disc plate is regulated. Thus, the disc plate 21 and the friction plate 22 are pressed between the brake piston 27 and the brim portion 12b.

Thereby, the friction brake force is generated between the disc plate 21 and the friction plate 22 and between the disc plate 21 and the brim portion 12b, so that a brake is put on the rotation of the cylinder block 3.

In order to cancel the brake action at the time of the brake action, the brake cancellation chamber 28 is connected to the hydraulic pressure supply source side. Thereby, the pressure oil is supplied into the brake cancellation chamber 28. Thus, the brake piston 27 is brought backward against the bias force of the brake springs 35.

By backward movement of the brake piston 27, force of pressing the disc plate 21 and the friction plate 22 by the brake springs 35 is cancelled and the friction force is no more generated, so that the brake action is cancelled.

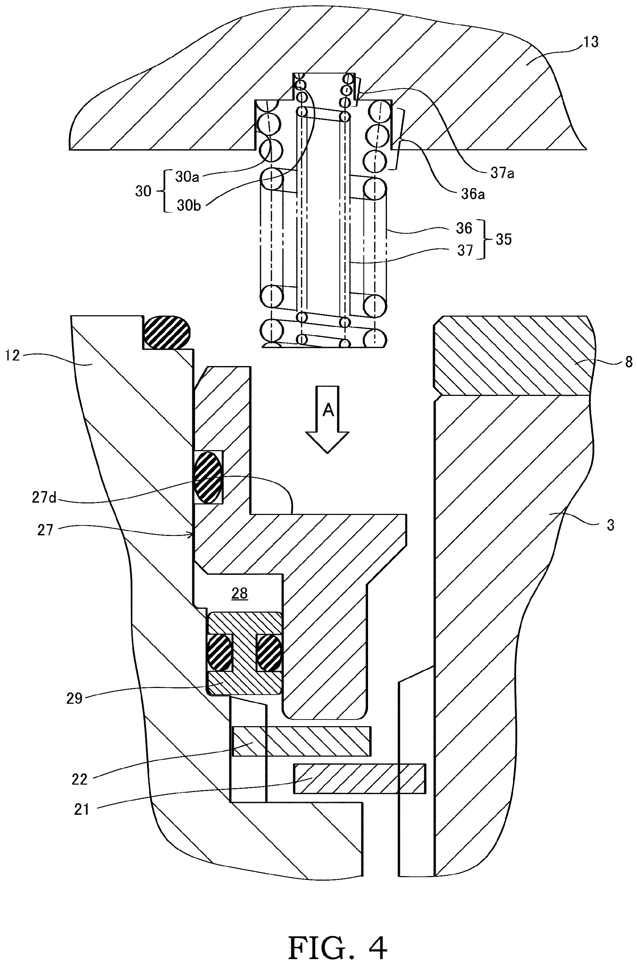

Next, with reference to Fig. 4, a method of manufacturing the brake device 20 will be described. In the following description, an upper portion in Fig. 4 will be called the "upper side", and a lower portion in Fig. 4 will be called the "lower side".

Firstly, the disc plate 21 is assembled into the outer periphery of the cylinder block 3 housed in the first case 12 from the upper side. Successively, the friction plate 22 is assembled into the inner periphery of the first case 12 from the upper side. Further, the ring body 29 is inserted into the first case 12 from the upper side.

After the disc plate 21, the friction plate 22, and the ring body 29 are assembled into the first case 12, the brake piston 27 is inserted into the first case 12 from the upper side.

Successively, the brake springs 35 are assembled into the first case 12. As described above, the one ends of the brake springs 35 are held by the second case 13. Thus, as shown in Fig. 4, the brake springs 35 are assembled by assembling the second case 13 in the arrow A direction from the upper side of the first case 12.

At this time, the brake springs 35 are in a state of hanging down on the lower side of the second case 13. Since the one end portions 36a, 37a are press-fitted into the groove 30, the brake springs do not drop down. Therefore, without using a holding tool or a jig for holding the brake springs 35, the brake springs 35 can be compressed and placed between the brake piston 27 and the second case 13.

As described above, the brake springs 35 are not arranged in the stage portion 27d of the brake piston 27 but held by the second case 13 at the time of manufacturing the brake device 20. Therefore, there is no need for forming a seating surface for positioning the brake springs 35 in the stage portion 27d. As a result, processing of the brake piston 27 is simplified, and manufacturing cost of the hydraulic motor 1 can be reduced.

The groove 30 may have such force of holding the brake springs 35 that the brake springs 35 do not drop off the second case 13 at the time of manufacturing the brake device 20. The force of holding does not have to be maintained after manufacturing.

According to the above first embodiment, the following advantages are afforded.

By press-fitting the one end portions 36a, 37a into the second case 13, the brake springs 35 are held by the second case 13 and placed between the brake piston 27 and the second case 13. In such a way, without using a holding tool or a jig for holding positions of the brake springs 35, the brake springs 35 can be assembled into the brake device 20. As a result, the number of parts of the brake device 20 is reduced, and the manufacturing cost of the hydraulic motor 1 can be reduced.

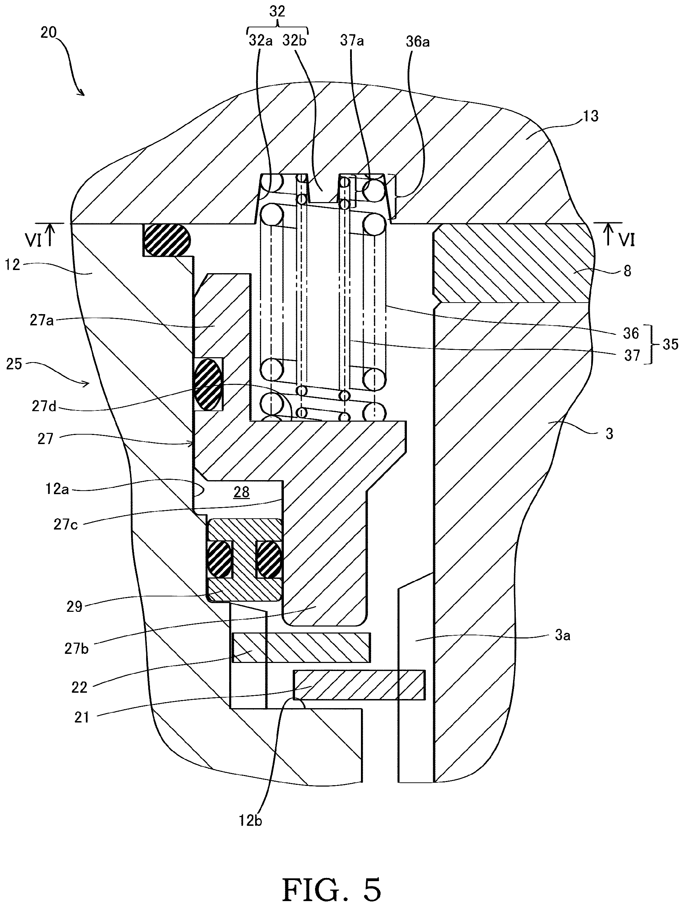

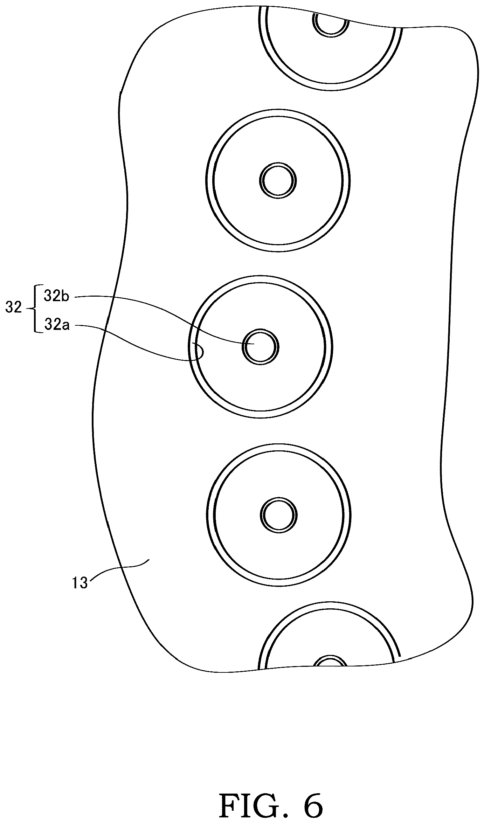

Hereinafter, with reference to Figs. 5 and 6, a modified example of the brake device 20 according to the above first embodiment will be described. Fig. 5 is a sectional view corresponding to Fig. 2 of the above first embodiment. Fig. 6 is a sectional view corresponding to Fig. 3 of the above first embodiment. For description, no brake springs 35 are shown in Fig. 6.

In the above first embodiment, in order to press-fit the brake springs 35 into the second case 13, the tapered portions are provided in the brake springs 35. Instead of this, a tapered portion may be provided on the side of the second case 13.

In the modified example, as shown in Figs. 5 and 6, a holding portion 32 configured to hold the brake springs 35 is formed in correspondence to each of the brake springs 35. The holding portion 32 has a bottomed hole 32a whose inner diameter is gradually reduced toward a bottom surface, and a projection 32b projecting into a truncated cone shape from the bottom surface of the bottomed hole 32a. The bottomed hole 32a corresponds to a dent shaped holding portion, and the projection 32b corresponds to a projection shape holding portion. The smallest inner diameter of the bottomed hole 32a is set to be smaller than an outer diameter of the outer spring 36. The maximum outer diameter of the projection 32b is set to be larger than an inner diameter of the inner spring 37.

Therefore, by inserting the brake springs 35 into the holding portion 32, an outer peripheral surface of the one end portion 36a of the outer spring 36 is press-fitted to an inner peripheral surface of the bottomed hole 32a, and an inner peripheral surface of the one end portion 37a of the inner spring 37 is press-fitted to an outer peripheral surface of the projection 32b. In such a way, the brake springs 35 are held by the second case 13 in the modified example as well as the first embodiment. Thus, the same advantages as the above first embodiment are afforded.

In the modified example, tapering processing to the brake springs 35 is not required. Thus, the conventional brake springs 35 can be used. As a result, the manufacturing cost of the hydraulic motor 1 can be further reduced.

In the modified example, the bottomed hole 32a is formed in correspondence to each of the brake springs 35. However, the bottomed hole may be a groove formed in correspondence to the plural brake springs 35 as in the first groove 30a of the first embodiment. In this case, side walls forming the groove are formed in such a manner that a gap between the side walls gradually extends toward an opening end.

Instead of the configuration in which the projection 32b projects in a truncated cone shape, the projection may project in a cylindrical shape. In this case, the one end portion 37a of the inner spring 37 is formed into a tapered shape in which an inner diameter is gradually reduced toward an end surface, and the inner peripheral surface of the one end portion 37a of the inner spring 37 is press-fitted to the outer peripheral surface of the projection 32b.

A highly-viscous incompressible fluid including a working fluid such as oil and a grease lubricant may be charged in the holding portion 32 and the brake springs 35 may be inserted into the holding portion 32. In this case, even when no tapered portions are provided in any of the holding portion 32 and the brake springs 35 but when the brake springs 35 are relatively light, the brake springs 35 are held by the holding portion 32 with viscosity force of the viscous fluid in the holding portion 32.

### <Second Embodiment>

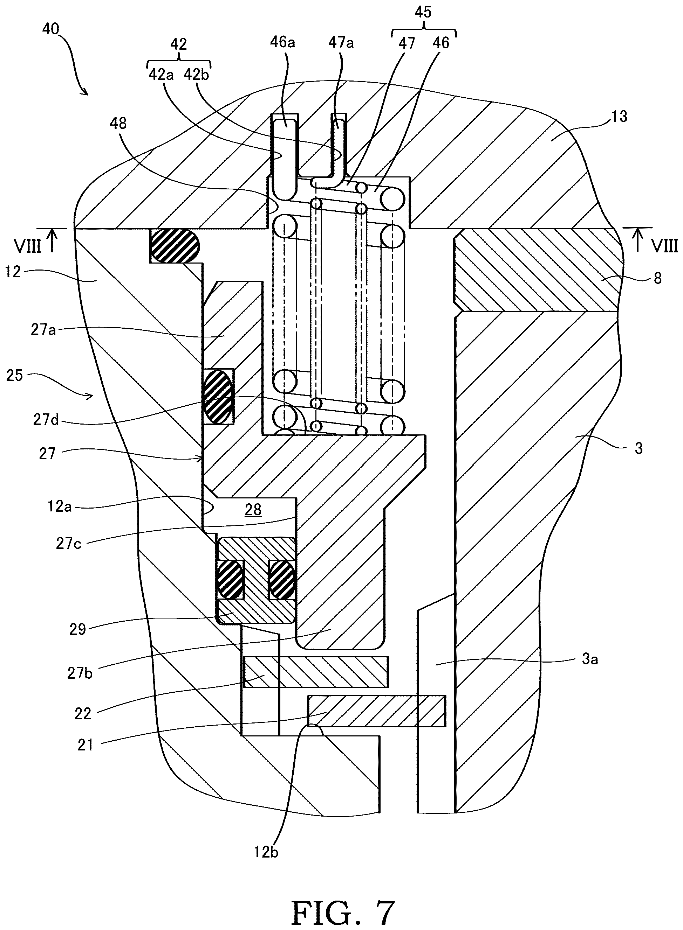

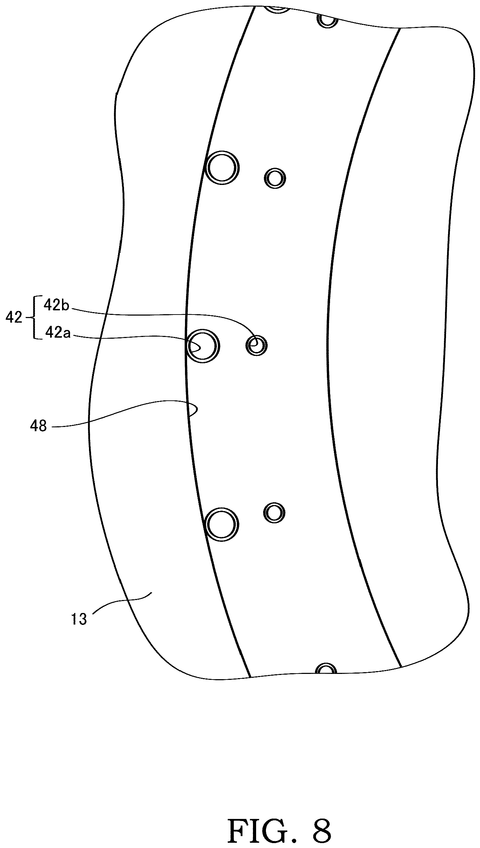

Next, with reference to Figs. 7 and 8, a brake device 40 according to a second embodiment of the present invention will be described. Hereinafter, different points from the first embodiment will be mainly described, and the same configurations as the first embodiment will be given the same reference signs and description thereof will be omitted.

The basic configurations of the brake device 40 are the same as those of the brake device 20 according to the first embodiment. The brake device 40 is different from the brake device 20 in a point that projection portions 46a, 47a projecting in the axial direction are provided in one ends of brake springs 45, and a bottomed hole 42 serving as a holding portion into which the projection portions 46a, 47a are inserted is provided in a second case 13.

The brake springs 45 are double coil springs having an outer spring 46 and an inner spring 47 arranged on the inner side of the outer spring 46, placed between a stage portion 27d and the second case 13. The extending portion 46a serving as a projection portion projecting in the axial direction is provided in one end of the outer spring 46 and the extending portion 47a serving as a projection portion projecting in the axial direction is provided in one end of the inner spring 47.

The extending portion 46a of the outer spring 46 is formed by bending an end portion of a wire rod of the spring toward the extension direction of the outer spring 46. The extending portion 47a of the inner spring 47 is formed by bending an end portion of a wire rod of the spring toward the center axis of the inner spring 47 and further bending the end portion toward the extension direction.

A housing groove 48 in which one end portion of each of the brake springs 45 is housed is provided in the second case 13. The bottomed hole 42 is formed in this housing groove 48. The bottomed hole 42 has a first bottomed hole 42a into which the extending portion 46a of the outer spring 46 is inserted, and a second bottomed hole 42b into which the extending portion 47a of the inner spring 47 is inserted. The first bottomed hole 42a and the second bottomed hole 42b correspond to the dent shaped holding portion. A diameter of the first bottomed hole 42a is set to be slightly smaller than a wire rod diameter of the outer spring 46, and a diameter of the second bottomed hole 42b is set to be slightly smaller than a wire rod diameter of the inner spring 47.

Therefore, by being inserted into the bottomed hole 42, the brake springs 45 are held by the second case 13. Specifically, by press-fitting the extending portion 46a of the outer spring 46 into the first bottomed hole 42a and press-fitting the extending portion 47a of the inner spring 47 into the second bottomed hole 42b, the outer spring 46 and the inner spring 47 are respectively held by the second case 13.

In such a way, the one ends of the brake springs 45 are held by the second case 13. Thus, even in a state where the other ends are away from the stage portion 27d, the brake springs do not drop off. Therefore, the brake device 40 according to the second embodiment having the above configuration can be manufactured in the same way as the brake device 20 according to the first embodiment.

Instead of the configuration in which an inner diameter of the bottomed hole 42 is set to be slightly smaller than the wire rod diameter of the brake springs 45, the brake springs 45 may be press-fitted into the bottomed hole 42 by setting an inner diameter of only part of the bottomed hole 42 slightly smaller than the wire rod diameter of the brake springs 45, or by setting an outer diameter of only part of the extending portions 46a, 47a inserted into the bottomed hole 42 slightly larger than the inner diameter of the bottomed hole 42. For example, the extending portion 46a is also press-fitted into the first bottomed hole 42a by making only an inner diameter of the vicinity of a bottom surface of the first bottomed hole 42a slightly smaller than the wire rod diameter of the brake springs 45. The extending portion 46a is also press-fitted to the first bottomed hole 42a by compressing and crushing part of the extending portion 46a inserted into the first bottomed hole 42a in the radial direction to form a portion slightly larger than the inner diameter of the first bottomed hole 42a in the extending portion 46a.

Positions of the extending portions 46a, 47a with respect to the springs 46, 47 are not limited to the above positions but any positions are acceptable as long as the extending portions are formed to project in the axial direction from end surfaces of the springs 46, 47. For example, each of the extending portions 46a, 47a may be formed by bending a wire rod extending toward the outer side of an outer diameter of the spring toward the extension direction of the spring. In a case where the extending portion 46a is provided on the outer side of the outer diameter of the outer spring 46 in such a way, and even when force of rotating the outer spring 46 with the extending portion 46a inserted into the first bottomed hole 42a as a support point is applied, movement of the outer spring 46 is regulated by side walls of the housing groove 48. Therefore, the outer spring 46 can be prevented from contact with the inner spring 47.

In the above second embodiment, the extending portion 47a of the inner spring 47 is provided in the axial center of the inner spring 47. Thus, even when the inner spring 47 is rotated centered on the extending portion 47a inserted into the second bottomed hole 42b, the inner spring 47 is prevented from contact with the outer spring 46. In order to prevent the outer spring 46 arranged in the housing groove 48 from being rotated with the extending portion 46a as a support point and brought into contact with the inner spring 47, a projection may be formed on the housing groove 48 or a member configured to regulate movement may be attached to the housing groove 48.

The housing groove 48 is formed in correspondence to the plural brake springs 45. However, the housing groove may be bottomed holes respectively formed in correspondence to the brake springs 45 as in the bottomed hole 32a of the modified example of the first embodiment. In this case, even when force of rotating the outer spring 46 with the extending portion 46a inserted into the first bottomed hole 42a as a support point is applied, movement of the outer spring 46 is regulated by an inner peripheral surface of the bottomed hole. Therefore, the outer spring 46 can be prevented from contact with the inner spring 47.

The bottomed hole 42 is provided in the housing groove 48. However, the bottomed hole may be directly formed in the second case 13 without providing the housing groove 48. The first bottomed hole 42a is respectively formed in correspondence to each of the brake springs 45 but may be formed into a groove shape in such a manner that the extending portions 46a of the plural brake springs 45 are inserted. Similarly, the second bottomed hole 42b may be formed into a groove shape in such a manner that the extending portions 47a of the plural brake springs 45 are inserted.

According to the above second embodiment, the following advantages are afforded.

By press-fitting the extending portions 46a, 47a into the second case 13, the brake springs 45 are held by the second case 13 and placed between the brake piston 27 and the second case 13. In such a way, without using a holding tool or a jig for holding positions of the brake springs 45, the brake springs 45 are assembled into the brake device 40. As a result, the number of parts of the brake device 40 is reduced, and manufacturing cost of a hydraulic motor 1 can be reduced.

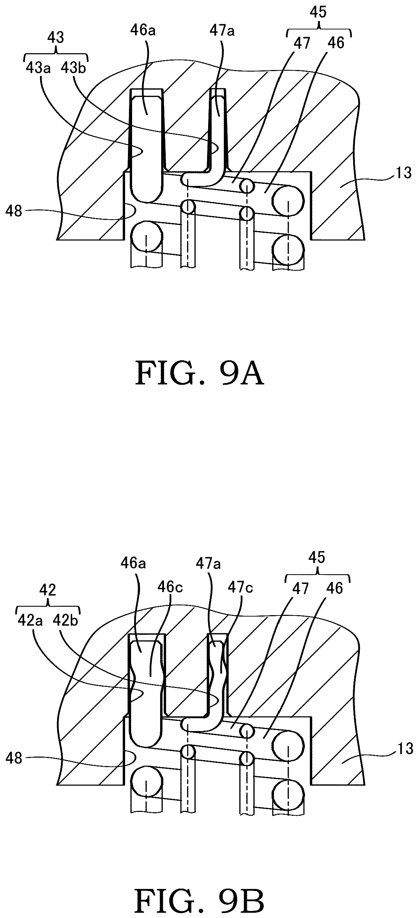

Hereinafter, with reference to Figs. 9A to 9E, first to fifth modified examples of the brake device 40 according to the second embodiment of the present invention will be described.

In the above second embodiment, the diameter of the bottomed hole 42 is set to be slightly smaller than the wire rod diameter of the brake springs 45. Instead of this, as in the first modified example shown in Fig. 9A, a bottomed hole 43 may be formed into a tapered shape, and the extending portions 46a, 47a may be press-fitted into bottomed holes 43a, 43b. With such a configuration, the same advantages as the above second embodiment are afforded. In particular, contact surfaces of the bottomed hole 43 in contact with the extending portions 46a, 47a by press-fitting are formed to be inclined with respect to the axial direction of an output shaft 2. Thus, the brake springs 45 are reliably held by the second case 13. Instead of the bottomed hole 43, the extending portions 46a, 47a may be formed into a tapered shape.

As in the second modified example shown in Fig. 9B, bent portions 46c, 47c may be respectively provided in the extending portions 46a, 47a inserted into the bottomed holes 42a, 42b and the extending portions 46a, 47a may be press-fitted into the bottomed holes 42a, 42b or caught by the friction force via the bent portions 46c, 47c. The bent portions 46c, 47c are formed to expand in the direction orthogonal to the extending direction of the extending portions 46a, 47a.

With such a configuration, the same advantages as the above second embodiment are afforded. Further, in comparison to the above second embodiment, size precision for the bottomed holes 42a, 42b is less required. Thus, processing of the bottomed holes 42a, 42b is more easily performed.

Part of the extending portions 46a, 47a are press-fitted. Thus, in comparison to a case where the whole peripheries of the extending portions 46a, 47a are press-fitted, force required for press-fitting is reduced. Thus, the extending portions can be easily press-fitted. With the configuration in which the extending portions are caught by the friction force, in comparison to a case of press-fitting, size precision for the bent portions 46c, 47c is less required. Thus, processing of the bent portions 46c, 47c is easily performed. Further, at the time of performing an insertion task, by appropriately adjusting size of the bent portions 46c, 47c in such a manner that the extending portions 46a, 47a are caught onto the bottomed holes 42a, 42b, the extending portions 46a, 47a can be easily engaged with the bottomed holes 42a, 42b.

A shape of the bent portions 46c, 47c is not limited to the above shape but any portions of the extending portions 46a, 47a inserted into the bottomed holes 42a, 42b may be bent with respect to the extending direction of the extending portions 46a, 47a. For example, leading ends of the extending portions 46a, 47a may be inclined with respect to the extending direction of the extending portions 46a, 47a. As long as the extending portions 46a, 47a are held by the bottomed holes 42a, 42b by inserting the bent portions 46c, 47c into the bottomed holes 42a, 42b, the shape of the bent portions 46c, 47c may be any shape.

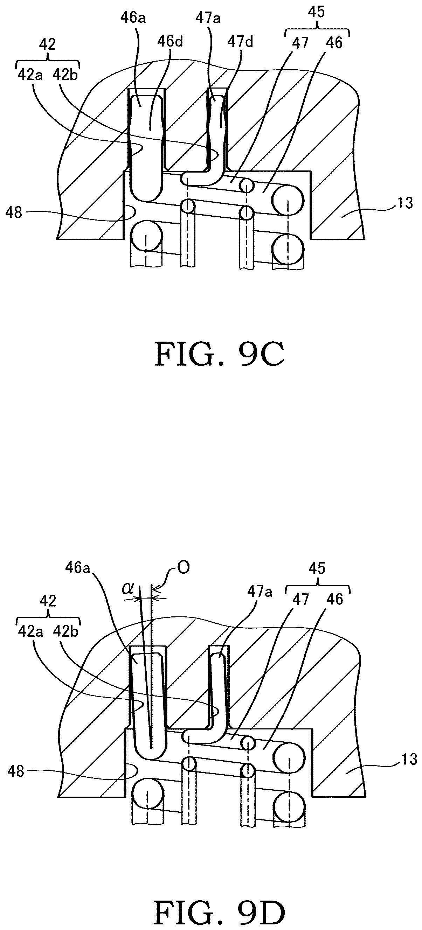

As in the third modified example shown in Fig. 9C, large diameter portions 46d, 47d whose diameters are larger than outer diameters of the extending portions 46a, 47a may be respectively provided in the extending portions 46a, 47a inserted into the bottomed holes 42a, 42b and the extending portions 46a, 47a may be press-fitted into the bottomed holes 42a, 42b or caught by the friction force via the large diameter portions 46d, 47d. The large diameter portions 46d, 47d are formed by compressing and crushing part of the extending portions 46a, 47a in the radial direction. A sectional shape of the large diameter portions 46d, 47d is formed into an elliptical shape, an oval shape, a wedge shape, etc. The sectional shape of the large diameter portions 46d, 47d is not limited to the above shapes. As long as the extending portions 46a, 47a are press-fitted into or caught onto the bottomed holes 42a, 42b by inserting the extending portions 46a, 47a into the bottomed holes 42a, 42b, the sectional shape may be any shape.

With such a configuration, the same advantages as the above second embodiment are afforded. Further, in comparison to the above second embodiment, size precision for the bottomed holes 42a, 42b is less required. Thus, processing of the bottomed holes 42a, 42b is more easily performed.

As well as the second modified example, part of the extending portions 46a, 47a are press-fitted. Thus, in comparison to a case where the whole peripheries of the extending portions 46a, 47a are press-fitted, force required for press-fitting is reduced. Thus, the extending portions can be easily press-fitted. With the configuration in which the extending portions are caught by the friction force, in comparison to a case of press-fitting, size precision for the large diameter portions 46d, 47d is less required. Thus, processing of the large diameter portions 46d, 47d is easily performed. Further, at the time of performing the insertion task, by appropriately adjusting size of the large diameter portions 46d, 47d in such a manner that the extending portions 46a, 47a are caught onto the bottomed holes 42a, 42b, the extending portions 46a, 47a can be easily engaged with the bottomed holes 42a, 42b.

As in the fourth modified example shown in Fig. 9D, the extending portions 46a, 47a inserted into the bottomed holes 42a, 42b may be inclined by a predetermined inclination angle α with respect to the axial direction O of the brake springs 45, and the extending portions 46a, 47a may be respectively brought into contact with the bottomed holes 42a, 42b at two portions on the leading end side and the base end side. In this case, the extending portions 46a, 47a are caught onto the bottomed holes 42a, 42b by friction force of the contact portions.

With such a configuration, the same advantages as the above second embodiment are afforded. Further, in comparison to the above second embodiment, size precision for the bottomed holes 42a, 42b is less required. Thus, processing of the bottomed holes 42a, 42b is more easily performed.

In comparison to a case of press-fitting, size precision for the extending portions 46a, 47a is less required. Thus, processing of the extending portions 46a, 47a is more easily performed. Further, at the time of performing the insertion task, by appropriately adjusting magnitude of the inclination angle α of the extending portions 46a, 47a in such a manner that the extending portions 46a, 47a are caught onto the bottomed holes 42a, 42b, the extending portions 46a, 47a can be easily engaged with the bottomed holes 42a, 42b. By increasing the inclination angle α, the leading end side of the extending portions 46a, 47a can also be pressed onto the bottomed holes 42a, 42b after the brake springs 45 are assembled into the brake device 40. In this case, even after the brake springs 45 are assembled into the brake device 40, the brake springs 45 can be reliably prevented from dropping off the second case 13.

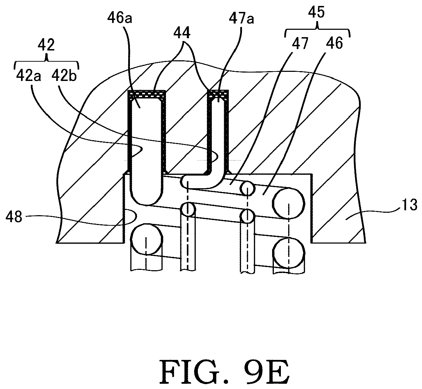

As in the fifth modified example shown in Fig. 9E, the extending portions 46a, 47a may be inserted into the bottomed holes 42a, 42b in which an incompressible viscous fluid 44 is charged. In the fifth modified example, gaps between the bottomed holes 42a, 42b and the extending portions 46a, 47a are filled with the viscous fluid 44. Therefore, in order to pull the extending portions 46a, 47a off the bottomed holes 42a, 42b, the viscous fluid 44 has to be moved to the end surface side of the extending portions 46a, 47a through slight gaps between the bottomed holes 42a, 42b and the extending portions 46a, 47a. That is, when the gaps formed between the bottomed holes 42a, 42b and the extending portions 46a, 47a are set to be small, the extending portions 46a, 47a less easily come out of the bottomed holes 42a, 42b. The higher the viscosity is, the less easily the viscous fluid 44 flows. Thus, by increasing the viscosity of the viscous fluid 44, the extending portions 46a, 47a can further less easily come out. In such a way, only by inserting the extending portions 46a, 47a into the bottomed holes 42a, 42b, the outer spring 46 and the inner spring 47 can be respectively held by the second case 13.

When the hydraulic motor 1 is activated, a periphery of the brake springs 45 is filled with a working fluid such as oil. Thus, as the viscous fluid 44 charged in the bottomed holes 42a, 42b, a highly-viscous incompressible fluid including a working fluid such as oil and a grease lubricant is preferably used.

With such a configuration, the same advantages as the above second embodiment are afforded. Further, the extending portions 46a, 47a are simply inserted into the bottomed holes 42a, 42b. Thus, in comparison to a case of press-fitting, the brake device 40 can be easily manufactured.

In the above embodiments, a state where the brake springs 35, 45 are held by the holding portion 30, 32, 42 is described mainly with press-fitting as an example. However, as long as the brake springs 35, 45 are engaged with the holding portion 30, 32, 42, the brake springs may be just caught by the friction force.

Hereinafter, the configurations, the operations, and the effects of the embodiments of the present invention will be collectively described.

The brake device 20, 40 that puts a brake on the hydraulic motor 1 including the cylinder block 3 to be rotated by hydraulic pressure and the output shaft 2 to be rotated integrally with the cylinder block 3 in the case 11 includes the disc plate 21 to be rotated together with the cylinder block 3, the disc plate being movable in the axial direction of the output shaft 2, the brake piston 27 supported by the first case 12 movably in the axial direction of the output shaft 2, and the brake springs 35, 45 compressed and placed between the brake piston 27 and the second case 13, the brake springs being configured to press the brake piston 27 toward the disc plate 21, wherein the second case 13 has the dent shaped or projection shaped holding portion 30, 32, 42 into which the one ends of the brake springs 35, 45 are inserted, and the brake springs 35, 45 are held by the holding portion 30, 32, 42 even in a state where the other ends are away from the brake piston 27.

With this configuration, by inserting the one ends into the holding portion 30, 32, 42, the brake springs 35, 45 are held by the second case 13 and placed between the brake piston 27 and the second case 13. In such a way, without using a holding tool or a jig for holding the positions of the brake springs 35, 45, the brake springs 35, 45 are assembled into the brake device 20, 40. As a result, the number of parts of the brake device 20, 40 is reduced, and the manufacturing cost of the hydraulic motor 1 can be reduced.

With this configuration, the brake springs 35, 45 are not arranged in the stage portion 27d of the brake piston 27 but held by the second case 13 at the time of manufacturing the brake device 20, 40. Therefore, there is no need for forming a seating surface for positioning the brake springs 35, 45 in the stage portion 27d of the brake piston 27. As a result, processing of the brake piston 27 is simplified, and the manufacturing cost of the hydraulic motor 1 can be reduced.

By engaging the one end portions 36a, 37a with the holding portion 30, 32, the brake springs 35 are held by the holding portion 30, 32.

With this configuration, without using a holding tool or a jig for holding the positions of the brake springs 35, the brake springs 35 are held by the holding portion 30, 32 by engagement. As a result, the number of parts of the brake device 20 is reduced, and the manufacturing cost of the hydraulic motor 1 can be reduced.

The surfaces of at least any one of the one end portions 36a, 37a of the brake springs 35 and the holding portion 30, 32, the surfaces to be in contact with the other by engagement are formed to be inclined with respect to the axial direction of the output shaft 2.

With this configuration, at least any one of the one end portions 36a, 37a of the brake springs 35 and the holding portion 30, 32 are formed into a tapered shape. Thus, the brake springs 35 are reliably held by the holding portion 30, 32.

The holding portion 30 is the grooves 30a, 30b formed to face the brake piston 27, and by engaging the outer peripheral surfaces of the one end portions 36a, 37a with the grooves 30a, 30b, the brake springs 35 are held by the holding portion 30.

The holding portion 32 is the bottomed hole 32a formed in correspondence to the brake spring 36, and by engaging the outer peripheral surface of the one end portion 36a with the inner peripheral surface of the bottomed hole 32a, the brake spring 36 is held by the holding portion 32.

The holding portion 32 is the projection 32b formed in correspondence to the brake spring 37, and by engaging the inner peripheral surface of the one end portion 37a with the outer peripheral surface of the projection 32b, the brake spring 37 is held by the holding portion 32.

With these configurations, the holding portion 32 with which the brake springs 35 are engaged is formed as a groove, a hole, or a projection. In such a way, a shape of the holding portion 32 is a simple shape. Thus, the holding portion 32 can be easily processed with respect to the second case 13.

The brake springs 45 have the projection portions 46a, 47a projecting in the axial direction in the one ends, the holding portion 42 is the bottomed holes 42a, 42b formed in correspondence to the brake springs 45, and by engaging the projection portions 46a, 47a with the bottomed holes 42a, 42b, the brake springs 45 are held by the holding portion 42.

With this configuration, without using a holding tool or a jig for holding the positions of the brake springs 45, the brake springs 45 are held by the holding portion 42 by engagement. As a result, the number of parts of the brake device 40 is reduced, and the manufacturing cost of the hydraulic motor 1 can be reduced.

The surfaces of at least any one of the projection portions 46a, 47a and the bottomed holes 42a, 42b, the surfaces to be in contact with the other by engagement are formed to be inclined with respect to the axial direction of the output shaft 2.

With this configuration, at least any one of the projection portions 46a, 47a and the bottomed holes 42a, 42b are formed into a tapered shape. Thus, the brake springs 45 are reliably held by the holding portion 42.

The bent portions 46c, 47c or the large diameter portions 46d, 47d are formed in the projection portions 46a, 47a inserted into the bottomed holes 42a, 42b.

With this configuration, the bent portions 46c, 47c or the large diameter portions 46d, 47d formed in the projection portions 46a, 47a are engaged with the bottomed holes 42a, 42b. Therefore, the brake springs 45 are reliably held by the holding portion 42 via the bent portions 46c, 47c or the large diameter portions 46d, 47d.

The brake springs 35, 45 are the double coil springs having the outer spring 36, 46 and the inner spring 37, 47, and the holding portion 30, 32, 42 have the first holding portion 30a, 32a, 42a configured to hold the outer spring 36, 46, and the second holding portion 30b, 32b, 42b configured to hold the inner spring 37, 47.

With this configuration, the brake springs 35, 45 having the outer spring 36, 46 and the inner spring 37, 47 are held by the first holding portion 30a, 32a, 42a and the second holding portion 30b, 32b, 42b. Even in a case where the brake springs 35, 45 are the double coil springs, the brake springs 35, 45 are reliably held by the holding portion 30, 32, 42.

The holding portion 42 is the bottomed holes 42a, 42b formed in correspondence to the brake springs 35, 45, the bottomed holes in which the viscous fluid 44 is charged, and by being inserted into the bottomed holes 42a, 42b, the brake springs 35, 45 are held by the holding portion 42.

With this configuration, without using a holding tool or a jig for holding the positions of the brake springs 45, the brake springs 35, 45 are held by the holding portion 42 by being inserted into the bottomed holes 42a, 42b in which the viscous fluid 44 is charged. As a result, the number of parts of the brake device 40 is reduced, and the manufacturing cost of the hydraulic motor 1 can be reduced.

The hydraulic motor 1 includes the brake device 20, 40 having the above configuration.

With this configuration, the hydraulic motor 1 includes the brake device 20, 40 in which the number of parts is reduced. Therefore, the manufacturing cost of the hydraulic motor 1 can be reduced.

The method of manufacturing the brake device 20, 40 that puts a brake on the hydraulic motor 1 including the cylinder block 3 to be rotated by fluid pressure, the output shaft 2 to be rotated integrally with the cylinder block 3, and the case 11 having the first case 12 and the second case 13 combined with the first case 12, the case being configured to house the cylinder block 3 and the output shaft 2, the method includes assembling the disc plate 21 into the outer periphery of the cylinder block 3 housed in the first case 12, inserting the brake piston 27 into the first case 12 from the upper side of the disc plate 21, and assembling the second case 13 from the upper side of the first case 12 in such a manner that the brake springs 35, 45 whose one ends are held by the second case 13 are disposed on the upper side of the brake piston 27, and thereby compressing and placing the brake springs 35, 45 between the brake piston 27 and the second case 13.

Before the second case 13 is assembled from the upper side of the first case 12, the one ends of the brake springs 35, 45 are inserted into the dent shaped or projection shaped holding portion 30, 32, 42 formed in the second case 13 in such a manner that the brake springs 35, 45 are held in a state of hanging down on the lower side of the second case 13.

With these configurations, the brake springs 35, 45 are held by the second case 13. Thus, without using a holding tool or a jig for holding the positions of the brake springs 35, 45, the brake springs 35, 45 can be assembled into the brake device 20, 40. As a result, the hydraulic motor 1 can be easily manufactured, and the manufacturing cost of the hydraulic motor 1 can be reduced.

Embodiments of the present invention were described above, but the above embodiments are merely examples of applications of the present invention, and the technical scope of the present invention is not limited to the specific constitutions of the above embodiments.

For example, by combining the outer spring 36 of the first embodiment and the inner spring 47 of the second embodiment, the holding portion may be formed by the groove 30a and the bottomed hole 43b. By combining the inner spring 37 of the first embodiment and the outer spring 46 of the second embodiment, the holding portion may be formed by the projection 32b and the bottomed hole 43a. In such a way, combination of the springs and combination of the springs and the holding portion can be freely selected.

The brake springs 35, 45 are not limited to the double coil springs but may be a single coil spring. In this case, in order to hold the single coil spring by the second case 13, any of the above holding portions 30a, 30b, 32a, 32b, 42a, 42b, 43a, 43b may be used.

This application claims priority based on Japanese Patent Application No. 2015-64758 filed with the Japan Patent Office on March 26, 2015, the entire contents of which are incorporated into this specification.

## Claims

1. A brake device configured to put a brake on a fluid pressure motor including a cylinder block to be rotated by fluid pressure and an output shaft to be rotated integrally with the cylinder block in a case, comprising:
a disc plate configured to rotate with the cylinder block, the disc plate being movable in the axial direction of the output shaft;
a brake piston supported by the case movably in the axial direction of the output shaft; and
a bias member compressed and placed between the brake piston and the case, the bias member being configured to press the brake piston toward the disc plate, wherein
the case has a dent shaped or projection shaped holding portion into which one end of the bias member is inserted, and
the bias member is held by the holding portion even in a state where the other end is away from the brake piston.

2. The brake device of the fluid pressure motor according to claim 1, wherein
the bias member is a coil spring, and
by engaging one end portion of the coil spring with the holding portion, the coil spring is held by the holding portion.

3. The brake device of the fluid pressure motor according to claim 2, wherein
a surface of at least any one of the one end portion of the coil spring and the holding portion, the surface to be in contact with the other by engagement is formed to be inclined with respect to the axial direction of the output shaft.

4. The brake device of the fluid pressure motor according to claim 2, wherein
the holding portion is a groove formed to face the brake piston, and
by engaging an outer peripheral surface of the one end portion with the groove, the coil spring is held by the holding portion.

5. The brake device of the fluid pressure motor according to claim 2, wherein
the holding portion is a bottomed hole formed in correspondence to the coil spring, and
by engaging an outer peripheral surface of the one end portion with an inner peripheral surface of the bottomed hole, the coil spring is held by the holding portion.

6. The brake device of the fluid pressure motor according to claim 2, wherein
the holding portion is a projection formed in correspondence to the coil spring, and
by engaging an inner peripheral surface of the one end portion with an outer peripheral surface of the projection, the coil spring is held by the holding portion.

7. The brake device of the fluid pressure motor according to claim 1, wherein
the bias member is a coil spring having a projection portion projecting in the axial direction in one end,
the holding portion is a bottomed hole formed in correspondence to the coil spring, and
by engaging the projection portion with the bottomed hole, the coil spring is held by the holding portion.

8. The brake device of the fluid pressure motor according to claim 7, wherein
a surface of at least any one of the projection portion and the bottomed hole, the surface to be in contact with the other by engagement is formed to be inclined with respect to the axial direction of the output shaft.

9. The brake device of the fluid pressure motor according to claim 7, wherein
a bent portion or a large diameter portion whose diameter is larger than an outer diameter of the projection portion is formed in the projection portion inserted into the bottomed hole.

10. The brake device of the fluid pressure motor according to claim 1, wherein
the bias member is a double coil spring having an outer spring and an inner spring, and
the holding portion has a first holding portion configured to hold the outer spring, and a second holding portion configured to hold the inner spring.

11. The brake device of the fluid pressure motor according to claim 1, wherein
the bias member is a coil spring,
the holding portion is a bottomed hole formed in correspondence to the coil spring, the bottomed hole in which a viscous fluid is charged, and
by being inserted into the bottomed hole, the coil spring is held by the holding portion.

12. A fluid pressure motor including the brake device according to claim 1.

13. A method of manufacturing a brake device configured to put a brake on a fluid pressure motor including a cylinder block to be rotated by fluid pressure, an output shaft to be rotated integrally with the cylinder block, and a case having a lower side case and an upper side case combined with the lower side case, the case being configured to house the cylinder block and the output shaft, the method comprising:
assembling a disc plate into an outer periphery of the cylinder block housed in the lower side case;
inserting a brake piston into the lower side case from the upper side of the disc plate; and
assembling the upper side case from the upper side of the lower side case in such a manner that a bias member whose one end is held by the upper side case is disposed on the upper side of the brake piston, and thereby compressing and placing the bias member between the brake piston and the upper side case.

14. The method of manufacturing the brake device of the fluid pressure motor according to claim 13, wherein
before the upper side case is assembled from the upper side of the lower side case,
the one end of the bias member is inserted into a dent shaped or projection shaped holding portion formed in the upper side case in such a manner that the bias member is held in a state of hanging down on the lower side of the upper side case.
